# EUROPÄISCHE PATENTSCHRIFT

(11) **EP 4 225 564 B1**
(45) Veröffentlichungstag und Bekanntmachung des Hinweises auf die Patenterteilung: **11.12.2024**
(21) Anmeldenummer: 21798280.0
(22) Anmeldetag: 04.10.2021
(51) Int. Cl.: B29D 30/06

(54) **HEIZPRESSE UND VERFAHREN ZUR VULKANISATION EINES FAHRZEUGREIFENS IN DIESER HEIZPRESSE UNTER VAKUUM**
HEATING PRESS AND METHOD FOR VULCANIZING A VEHICLE TIRE IN SAID HEATING PRESS UNDER VACUUM
PRESSE CHAUFFANTE ET PROCÉDÉ DE VULCANISATION D'UN PNEU DE VÉHICULE DANS LADITE PRESSE CHAUFFANTE SOUS VIDE

(30) Priorität: 05.10.2020 DE 102020212548
(43) Veröffentlichungstag der Anmeldung: 16.08.2023
(73) Patentinhaber: Continental Reifen Deutschland GmbH, 30175 Hannover (DE)
(72) Erfinder: WENZEL, Karsten, 30165 Hannover (DE); WEDEKIND, Horst, 30165 Hannover (DE); RAMM, Michael, 30165 Hannover (DE)
(74) Vertreter: Continental Corporation
(86) Internationale Anmeldenummer: PCT/DE2021/200141
(87) Internationale Veröffentlichungsnummer: WO 2022/073566

(56) Entgegenhaltungen:
- EP-A1- 1 495 848
- US-A- 3 730 658
- US-A- 5 145 688

## Beschreibung

Die Erfindung betrifft eine Heizpresse zum Vulkanisieren eines Fahrzeugreifens mit einem Heizpressen-Oberteil und einem Heizpressen-Unterteil, wobei an dem Heizpressen-Oberteil ein die Formteile einer Vulkanisierform aufweisender Container und ein diesen umschließendes zylindrisches Hauben-Oberteil angeordnet ist und wobei das Heizpressen-Oberteil und das Heizpressen-Unterteil mit dem Container derart in Verbindung stehen, so dass beim Herunterfahren des Heizpressen-Oberteils über einen in axialer Richtung erfolgenden Hub die Formteile der Vulkanisierform in radialer Richtung schließbar sind. Die Erfindung betrifft ferner ein Verfahren zur Vulkanisation eines Rohreifens in dieser vorgenannten Heizpresse.

Die vorbeschriebene Heizpresse ist eine Standard-Heizpresse zum Vulkanisieren von Fahrzeugreifen unter atmosphärischen Bedingungen.

Die Heizpresse umfasst einen sogenannten Container, welcher die eigentliche segmentierte Vulkanisierform mit den dem Reifen formgebenden Formsegmenten und Seitenwandschalen sowie Wulstringen umfasst. Zudem sind Heizkammern zum Temperieren der formgebenden Teile angeordnet. Der Container ist während der Vulkanisation von einer geschlossenen Haube umgeben, welche im Stand der Technik primär zur Temperaturisolation während der Vulkanisation dient.

Um Fehlstellen an der Reifenoberfläche möglichst zu vermeiden, muss die Luft zwischen der Oberfläche des Rohreifens und der formgebenden Oberfläche der Formteile der Vulkanisierform entfernt werden. Hierzu ist es generell bekannt, dass 1000 bis 5000 Entlüftungsventile in den Formteilen vorzusehen sind. Durch diese Entlüftungsventile wird die Luft aus dem Formenhohlraum nach radial und axial außen durch Entlüftungskanäle abgeführt. Jedoch müssen die Formteile einer neuen Vulkanisierform mit diesen Ventilen bestückt werden. Weiterhin neigen diese Ventile durch eindringendes Gummi von dem zu vulkanisierenden Reifen zum Verdrecken, so dass diese aufwändig ausgetauscht oder gereinigt werden müssen.

Die Patentschrift US 5 145 688 A offenbart eine Vulkanisierpresse mit einem Ober- und einem Unterteil, die der im Oberbegriff des unabhängigen Anspruchs 1 genannten ähnlich sind.

Der Erfindung liegt die Aufgabe zugrunde, eine Heizpresse zum Vulkanisieren eines Fahrzeugreifens bereitzustellen, mit welcher zuverlässig Fahrzeugreifen unter Verzicht auf Entlüftungsventile in der Vulkanisierform vulkanisiert werden kann. Es ist ebenfalls die Aufgabe der Erfindung, ein Verfahren zum zeiteffizienten Vulkanisieren eines Fahrzeugreifens mit vorgenannter Heizpresse zur Verfügung zu stellen.

Die Aufgabe wird in Bezug auf die Heizpresse gelöst, indem
- das Hauben-Oberteil und das Heizpressen-Oberteil in axialer Richtung unabhängig voneinander und relativ zueinander verfahrbar sind,
- das zylindrische Hauben-Oberteil eine Länge aufweist, welche ausreichend ist, um bei geöffnetem Heizpressen-Oberteil einen geschlossenen Haubeninnenraum mit dem Heizpressen-Unterteil und Heizpressen-Oberteil auszubilden,
- zumindest je eine vakuumdichte Dichtung an denjenigen Flächen angeordnet ist, an denen das Hauben-Oberteil unmittelbar an das Heizpressen-Oberteil und - bei geschlossenem Haubeninnenraum - an das Heizpressen-Unterteil angrenzt, um den geschlossenen Haubeninnenraum vakuumdicht abdichtbar zu gestalten, wobei die Dichtungen vorzugsweise an dem Heizpressen-Oberteil und an dem Heizpressen-Unterteil angeordnet sind,
- bei einem ersten Hub das Hauben-Oberteil unabhängig vom Heizpressen-Oberteil derart in axialer Richtung verfahrbar ist, dass dieses mit dem Heizpressen-Unterteil einen vakuumdichten Haubeninnenraum ausbildet, während die Vulkanisierform jedoch noch luftdurchlässig geöffnet ist,
- eine Pumpe und ein Vakuumtank angeordnet sind, mittels derer im Innenraum der Haube nach dem ersten Hub ein Vakuum erzeugbar ist, wobei der Vakuumtank und die Pumpe mit dem Innenraum der Haube in Verbindung stehen und wobei der Vakuumtank und die Pumpe miteinander in Verbindung stehen und
- bei einem zweiten Hub das Heizpressen-Oberteil unabhängig von dem Hauben-Oberteil derart in axialer Richtung verfahrbar ist, dass die Vulkanisierform unter Vakuumbedingungen im Innenraum der Haube vollständig schließbar ist.

Wesentlich ist, dass mit der erfindungsgemäßen Heizpresse Fahrzeugreifen unter Vakuum vulkanisiert werden. Die Vulkanisierform selber weist keine Entlüftungsmittel zur Entlüftung des Formenhohlraumes auf. Durch die Vulkanisation unter Vakuum wird auf die im Stand der Technik in der Vulkanisierform angeordneten 1000 bis 5000 Entlüftungsventile verzichtet, durch welche die Luft aus dem Formenhohlraum nach radial außen abgeleitet wird. Hierdurch ist eine Nachbearbeitung der durch die Entlüftungsmittel erhaltenen Gummiaustriebe am Reifen und ein Austausch bzw. die Reinigung nicht mehr funktionsfähiger Entlüftungsventile nicht mehr notwendig. Dieses ist zeit- und kostengünstig. Zudem erhält der vulkanisierte Reifen durch die Vulkanisation unter Vakuum eine äußere Form, welche absolut frei von Fehlstellen ist und dadurch perfekt anmutet.

Das Vakuum, welches nach dem ersten Hub des Hauben-Oberteils innerhalb des geschlossenen Haubeninnenraumes erhaltbar ist, dient dazu, die Luft aus der noch nicht geschlossenen Vulkanisierform, insbesondere zwischen der äußeren Oberfläche des Reifens und den Formflächen der formenden Teile der Vulkanisierform zu entfernen. Nach dem zweiten, unter Vakuumbedingungen im Haubeninnenraum erfolgenden zweiten Hub durch das Heizpressen-Oberteil, ist die Vulkanisierform vollständig schließbar. Der zu vulkanisierenden Reifen ist hochqualitativ und ohne Fehlstellen zu fertigen. Dabei kann zur Ausbildung des vakuumdichten Haubeninnenraumes in einer Ausführung der Erfindung die Stirnfläche des Hauben-Oberteils auf das Heizpressen-Unterteil auffahren oder in einer anderen Ausführung der Erfindung über das Heizpressen-Unterteil fahren, so dass das Ende des Hauben-Oberteiles das Heizpressen-Unterteil einschließt.

Es ist selbstverständlich, dass die Haube bzw. Heizpresse zum Erhalt eines vakuumdichten Haubeninnenraumes weitere Dichtungen aufweisen kann. An dem Container oder der Vulkanisierform selber sollen ausdrücklich keine Veränderungen hinsichtlich vakuumdichtender Maßnahmen vorgenommen sein.

Der Begriff Vakuum meint Luftdruck im Bereich von 950mbar (abs) bis 0, 1mbar (abs). Die Ringdichtung weist vorzugsweise einen runden oder eckigen Querschnitt auf.

Zweckmäßig ist es, wenn ein hydraulischer, pneumatischer oder elektrischer Aktuator angeordnet ist, durch den das Hauben-Oberteil in axialer Richtung verfahrbar ist.

In einer bestimmten Ausführung der Erfindung ist an dem Heizpressen-Unterteil ein Hauben-Unterteil in Form eines Kreisringes angeordnet, wobei der Kreisring des Hauben-Oberteiles und der Kreisring des Hauben-Unterteiles den gleichen Innendurchmesser und den gleichen Außendurchmesser aufweisen und miteinander fluchtend in der Heizpresse angeordnet sind. Hierdurch ist eine sehr zuverlässige Dichtung des Haubeninnenraumes erhalten.

Zweckmäßig ist es, wenn die Dichtungen Ringdichtungen mit runden, eckigen und/oder flachen Querschnitten sind.

Zweckmäßig ist es für eine zuverlässige Dichtleistung, wenn die Ringdichtung in einer kreisringförmigen Nut angeordnet ist, wobei der Durchmesser der Ringdichtungen geringfügig größer als die Tiefe der Nut ist. Geringfügig größer meint, dass die Dichtung beim Einbau in die Nut und im dichtenden Zustand maximal 40% komprimiert wird im Vergleich zur kompressionsfreien Geometrie der Dichtung. Durch die genaue Auslegung der Nut im Verhältnis zur Dichtungsgeometrie wird einer Beschädigung der Dichtung(en) zusätzlich vorgebeugt und die Haltbarkeit verbessert.

In einer Ausführung der Erfindung bestehen die Ringdichtung aus Vollmaterial. Das Vollmaterial kann aus einem oder mehreren für Dichtungen bekannten Materialien wie zum Beispiel FKM oder FFKM bestehen. Diese Dichtungen sind kostengünstig und einfach handzuhaben.

In einer anderen Ausführung der Erfindung ist die Ringdichtung ein in ihrem Durchmesser veränderbarer Schlauch. Dieses hat den Vorteil, dass die Ringdichtung geringer belastet wird und erst dann in seinem Durchmesser vergrößert wird, wenn die Dichtwirkung erforderlich ist.

Vorteilhaft ist es, wenn die Ringdichtungen differentiell gepumpte Doppelringdichtungen sind. Dieses hat den Vorteil, dass etwaige Leckagen mit geringen Pumpleistungen kompensiert werden können.

Zweckmäßig ist es, wenn der Vakuumtank ein Volumen aufweist, welches etwa 5 bis 10mal größer als das Volumen der geschlossenen Haube (inklusive Form, Container, Reifenrohling, Heizbalg) ist. Hierdurch ist sichergestellt, dass in der Haube zuverlässig ein Vakuum erzeugbar ist. Zudem ist die erforderliche Zeit für das Erzeugen des notwendigen Vakuums signifikant reduziert. Dieses kann im Rahmen des normalen Be- und Entladeprozeßes stattfinden.

In Bezug auf das Verfahren mit einer vorgenannten Heizpresse wird die Erfindung dadurch gelöst, dass man folgende Schritte nacheinander ausführt:
a) Beladen der geöffneten Heizpresse durch Einlegen des zu vulkanisierenden Rohreifens in den Container,
b) Verfahren des Hauben-Oberteils um einen ersten Hub in axialer Richtung in Richtung Heizpressen-Unterteil, bis ein geschlossener Haubeninnenraum aus Hauben-Oberteil, Heizpressen-Oberteil und Heizpressen-Unterteil erhalten ist, während die Vulkanisierform noch geöffnet ist,
c) nur im Fall, dass die Ringdichtung ein in ihrem Durchmesser veränderbarer Schlauch ist: Aufpumpen der kreisringförmigen Schlauchdichtung, um den Haubeninnenraum vakuumdicht abzudichten,
d) Öffnen der Verbindung zwischen Vakuumtank und Haubeninnenraum zur Erzeugung eines Teil-Vakuums in dem vakuumdicht geschlossenen Haubeninnenraum durch Druckausgleich zwischen Vakuumtank und Haubeninnenraum,
e) bei Erhalt des Teil-Vakuums im Haubeninnenraum: Schließen der Verbindung zwischen Vakuumtank und Haubeninnenraum, Öffnen der Verbindung zwischen Haubeninnenraum und Pumpe und Abpumpen der restlich verbliebenden Luft aus dem Haubeninnenraum zur Erzeugung des Vakuums,
f) Verfahren des Heizpressen-Oberteiles um einen zweiten Hub, bei dem man den Container derart verfährt, so dass die Vulkanisierform vollständig geschlossen wird und anschließendes Schließen der Verbindung zwischen dem Haubeninnenraum und der Pumpe,
g) Vulkanisation des Rohreifen und Öffnen der Verbindung zwischen Pumpe und Vakuumtank und Erzeugung eines Vakuums im Vakuumtank, wobei die Verbindung der Pumpe zu dem Haubeninnenraum und die Verbindung des Vakuumtanks zum Haubeninnenraum jeweils geschlossen sind,
h) Öffnen der Heizpresse durch Verfahren des Hauben-Oberteils und des Heizpressen-Oberteils und Entladen des fertig vulkanisierten Reifens
und zur Vulkanisierung jedes weiteren Reifens Wiederholung der Schritte a) - h).

Vorteilhaft ist es, wenn man zur Erleichterung von Schritt h) vorher ein weiteres in der Haube angeordnetes Ventil zum Brechen des Vakuums in der Haube öffnet und anschließend wieder schließt.

Ein Ausführungsbeispiel einer Heizpresse und das Verfahren zur Vakuum-Vulkanisation eines Fahrzeugluftreifens samt weiterer Vorteile sind anhand der nachfolgenden beiden schematischen Figuren beschrieben. Es zeigen die:
- Fig. 1: eine erfindungsgemäße Heizpresse mit Container im geöffneten Zustand,
- Fig. 2: die Heizpresse der Fig. 1 in geschlossenem Zustand.

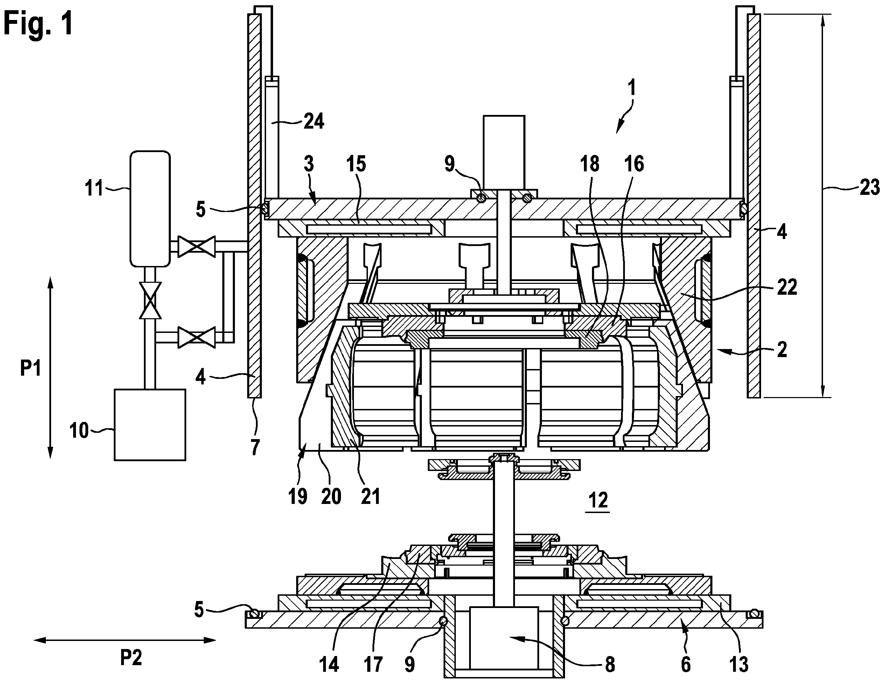

Die Fig. 1 zeigt eine erfindungsgemäße Heizpresse 1 mit einem Container 2 im geöffneten Zustand. Das Hauben-Oberteil befindet sich in seiner Ausgangsposition. Der Reifenrohling kann in die Heizpresse 1 eingebracht werden.

Die Heizpresse 1 umfasst ein Heizpressen-Unterteil 6 und ein Heizpressen-Oberteil 3 mit einem zylindrischen Hauben-Oberteil 4 und weist die entsprechenden Mechanismen zum Positionieren des zu vulkanisierenden Reifens, zur Betätigung der Bestandteile der Vulkanisationsform, zum Einbringen der Heizmedien und zum Entfernen des fertig vulkanisierten Reifens auf. Im Innenraum des Hauben-Oberteils 4 ist ein Container 2 am Heizpressen-Oberteil 3 derart angeordnet, dass beim Verfahren des Heizpressen-Oberteils 3 in axialer Richtung P1 die im Container angeordneten Formteile der Vulkanisierform in radialer Richtung P2 verfahrbar sind.

Es ist ein "Mittenmechanismus" 8 angeordnet, an dem ein Heizbalg (nicht dargestellt) befestigt ist, welcher in den Reifenrohling (nicht dargestellt) einfügbar ist. Zudem sind Düsen (nicht dargestellt) am Mittenmechanismus 8 angeordnet, durch welche ein Heizmedium in den Heizbalg (nicht dargestellt) eingebracht werden kann.

Das Hauben-Oberteil 4 und das Heizpressen-Oberteil 3 sind in axialer Richtung P1 unabhängig voneinander und relativ zueinander verfahrbar. Das zylindrische Hauben-Oberteil 4 weist eine Länge 23 auf, welche ausreichend ist, um bei noch geöffneter Vulkanisierform, also bei nicht vollständig auf das Heizpressen-Unterteil 6 verfahrenem Heizpressen-Oberteil 3 einen geschlossenen Haubeninnenraum 12 mit dem Heizpressen-Unterteil 6 und Heizpressen-Oberteil 3 auszubilden.

Das Hauben-Oberteil 4 ist luftdicht bzw. vakuumdicht ausgeführt und bildet in geschlossenem Zustand einen vakuumdichten Haubeninnenraum 12 aus. Um die Stirnfläche 7 des Hauben-Oberteils 4 im geschlossenen Zustand vakuumdicht zu dichten, ist eine Ringdichtung 5 mit flachem Querschnitt an dem Heizpressen-Unterteil 6 dort angeordnet, wo die Stirnfläche 7 des Hauben-Oberteils 4 im geschlossenen Zustand der Haube auf dem Heizpressen-Unterteil 6 aufliegt. Eine weitere Ringdichtung 5 ist an dem Heizpressen-Oberteil 3 dort angebracht, wo das Hauben-Oberteil 4 unmittelbar an das Heizpressen-Oberteil 3 angrenzt. Weitere Ringdichtungen 9 dichten zumindest den Mittenmechanismus 8 gegenüber dem Haubeninnenraum 12 vakuumdicht ab.

Der Container 2 ist ein üblicher, bereits im Stand der Technik bekannter Container 2.

Der Container 2 beinhaltet die segmentierte Vulkanisierform mit einer unteren Heizplatte 13, einer unteren Seitenwandschale 14, einer oberen Heizplatte 15, einer oberen Seitenwandschale 16, einem unteren Wulstring 17 und einem oberen Wulstring 18. Zu jenen Bestandteilen der Vulkanisationsform, die zum Öffnen und Schließen in senkrechter (= axialer) Richtung (Pfeil P1) bewegt werden, gehören der Segmentring 19 bestehend aus sieben bis neun Segmentschuhen 20 und die daran befestigten Profil-/Formsegmente 21 sowie die obere Seitenwandschale 16 mit dem oberen Wulstring 18. Die Segmentschuhe 20 werden zum Schließen und Öffnen der Vulkanisationsform radial, in Richtung des Pfeiles P2, auseinandergefahren. An der oberen Heizplatte 15 ist ein Schließring 22 angeordnet, welcher eine abgeschrägte Innenfläche aufweist, die mit abgeschrägten Außenflächen der Segmentschuhe 20 des Segmentringes 19 derart zusammen wirken, dass beim Schließen der Vulkanisationsform die Segmentschuhe 20 in radialer Richtung zum geschlossenen Segmentring 19 zusammengefahren werden. In der unteren Heizplatte 13, der oberen Heizplatte 15 und im Schließring 22 sind Heizkammern enthalten, in welche zum Vulkanisieren des Reifens zumindest ein Heizmedium, insbesondere Sattdampf (Wasserdampf) eingeleitet wird. Auf diese Weise wird der Rohreifen (nicht dargestellt) von außen über die Segmentschuhe 20, die Seitenwandschalen 14, 16 und die Wulstringe 17, 18 beheizt, sodass diese Heizung üblicherweise als Außenheizung bezeichnet wird.

Ein üblicher Heizbalg (nicht dargestellt) ist in bekannter Weise angeordnet und wird mit zumindest einem Heizmedium unter Druck befüllt, um den Rohreifen in der Form von innen her zu zentrieren, wobei der Heizbalg in eine reifengemäße Torusform gebracht wird. Nachdem der Rohreifen über den Heizbalg von innen erhitzt wird, wird diese Art der Heizung als Innenheizung bezeichnet.

Bei einem ersten Hub Hi - nicht in den Figuren dargestellt - ist das Hauben-Oberteil 3 mittels eines Aktuators 24 unabhängig vom Heizpressen-Oberteil 3 derart in axialer Richtung P1 verfahrbar, dass dieses mit dem Heizpressen-Unterteil 6 einen vakuumdichten Haubeninnenraum 12 ausbildet, während die Vulkanisierform jedoch noch luftdurchlässig geöffnet ist.

Mit dem ersten Hub Hi, welcher mit dem Hauben-Oberteil 4 ausgeführt wird, kann jedoch auch gleichzeitig das Heizpressen-Oberteil 3 verfahren werden - jedoch muss die Vulkanisierform nach dem ersten Hub Hi noch geöffnet bleiben.

Es sind eine Pumpe 10 und ein Vakuumtank 11 angeordnet, mittels derer im Innenraum 12 der Haube nach dem ersten Hub Hi ein Vakuum erzeugbar ist. Der Vakuumtank 11 und die Pumpe 10 stehen mit dem Innenraum 12 der Haube in Verbindung und der Vakuumtank 11 und die Pumpe 10 stehen miteinander in Verbindung. Durch ein Vakuum im Haubeninnenraum (= Innenraum der Haube) 12, insbesondere während des Einformens und der Vulkanisation des Reifens, ist auf übliche in der Formfläche der Vulkanisierform angeordnete Entlüftungsventile komplett verzichtet.

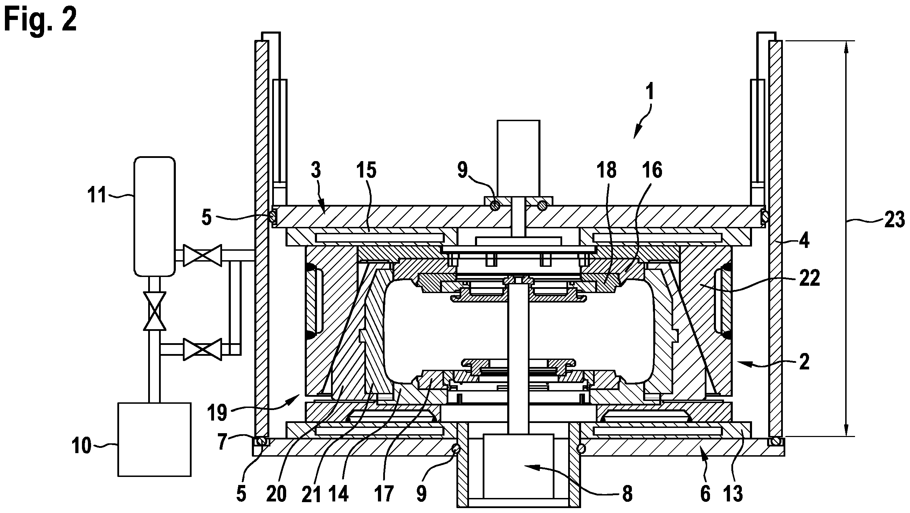

Die Fig. 2 zeigt die Heizpresse 1 der Fig. 1 in geschlossenem Zustand, welcher nach einem zweiten Hub H₂ erhalten ist, bei dem das Heizpressen-Oberteil 3 unabhängig von dem Hauben-Oberteil 4 in axialer Richtung P1 verfahrbar ist, so dass die Vulkanisierform unter Vakuumbedingungen im Innenraum 12 der Haube vollständig geschlossen ist. Die Verbindung zwischen Vakuumtank 11 und Haubeninnenraum 12 ist geschlossen. Anschließend schließt man die Verbindung zwischen dem Haubeninnenraum 12 und der Pumpe 10. Es erfolgt die Vulkanisation des Rohreifen.

Bei einem PKW-Reifen dauert das Vulkanisieren desselben etwa 15 Minuten. Während dieser Zeit wird die Verbindung zwischen Pumpe 10 und Vakuumtank 11 zur Erzeugung eines Vakuums im Vakuumtank 11 geöffnet, wobei die Verbindung der Pumpe 10 zur Haube und die Verbindung des Vakuumtanks 11 zur Haube jeweils geschlossen sind. Nach erfolgter Vulkanisation des Reifens wird das Volumen des Haubeninnenraumes 12 über ein Ventil belüftet (nicht dargestellt) und die Heizpresse 1 geöffnet, um den fertig vulkanisierten Reifen aus dem die Vulkanisierform aufweisenden Container 2 zu entladen. Hierzu fährt das Heizpressen-Oberteil 3 mit dem Container 2 und das Hauben-Oberteil 4 nach oben und die Profilsegmente 21 werden gleichzeitig in radialer Richtung P2 nach außen verfahren. Der Reifen wird freigegeben.

### Bezugszeichenliste

### (Teil der Beschreibung)

- 1: Heizpresse
- 2: Container
- 3: Heizpressen-Oberteil
- 4: Hauben-Oberteil
- 5: Ringdichtung
- 6: Heizpressen-Unterteil
- 7: Stirnfläche des Hauben-Oberteils
- 8: Mittenmechanismus
- 9: Ringdichtung
- 10: Pumpe
- 11: Vakuumtank
- 12: Innenraum der Haube = Haubeninnenraum
- 13: untere Heizplatte
- 14: untere Seitenwandschale
- 15: obere Heizplatte
- 16: obere Seitenwandschale
- 17: unterer Wulstring
- 18: oberer Wulstring
- 19: Segmentring
- 20: Segmentschuh
- 21: Profilsegment / Formsegment
- 22: Schließring
- 23: Länge des Hauben-Oberteils
- 24: Aktuator
- Hi: erster Hub
- H₂: zweiter Hub
- P1: Axiale Richtung
- P2: Radiale Richtung

## Patentansprüche

1. Heizpresse (1) zum Vulkanisieren eines Fahrzeugreifens unter Vakuum
- mit einem Heizpressen-Oberteil (3) und einem Heizpressen-Unterteil (6), wobei an dem Heizpressen-Oberteil (3) ein die Formteile (14, 16, 17, 18, 21) einer Vulkanisierform aufweisender Container (2) und ein diesen umschließendes zylindrisches Hauben-Oberteil (4) angeordnet ist und wobei das Heizpressen-Oberteil (3) und das Heizpressen-Unterteil (6) mit dem Container (2) derart in Verbindung stehen, so dass beim Herunterfahren des Heizpressen-Oberteils (3) über einen in axialer Richtung (P1) erfolgenden Hub die Formteile (14, 16, 17, 18, 21) der Vulkanisierform in radialer Richtung (P2) schließbar sind,
- wobei das Hauben-Oberteil (4) und das Heizpressen-Oberteil (3) in axialer Richtung (P1) unabhängig voneinander und relativ zueinander verfahrbar sind
- wobei das zylindrische Hauben-Oberteil (4) eine Länge (23) aufweist, welche ausreichend ist, um bei geöffnetem Heizpressen-Oberteil (3) einen geschlossenen Haubeninnenraum (12) mit dem Heizpressen-Unterteil (6) und Heizpressen-Oberteil (4) auszubilden,
- wobei zumindest je eine vakuumdichte Dichtung (5) an denjenigen Flächen angeordnet ist, an denen das Hauben-Oberteil (4) unmittelbar an das Heizpressen-Oberteil (3) und - bei geschlossenem Haubeninnenraum (12) - an das Heizpressen-Unterteil (6) angrenzt, um den geschlossenen Haubeninnenraum (12) vakuumdicht abdichtbar zu gestalten, wobei die Dichtungen (5) vorzugsweise an dem Heizpressen-Oberteil und an dem Heizpressen-Unterteil angeordnet sind,
- wobei bei einem ersten Hub (Hi) das Hauben-Oberteil (4) unabhängig vom Heizpressen-Oberteil (3) derart in axialer Richtung P1 verfahrbar ist, dass dieses mit dem Heizpressen-Unterteil (6) einen vakuumdichten Haubeninnenraum (12) ausbildet, während die Vulkanisierform jedoch noch luftdurchlässig geöffnet ist
- wobei eine Pumpe (10) und ein Vakuumtank (11) angeordnet sind, mittels derer im Innenraum der Haube (12) nach dem ersten Hub (Hi) ein Vakuum erzeugbar ist, wobei der Vakuumtank (11) und die Pumpe (10) mit dem Innenraum (12) der Haube (4) in Verbindung stehen und wobei der Vakuumtank (11) und die Pumpe (10) miteinander in Verbindung stehen und
- wobei bei einem zweiten Hub (H₂) das Heizpressen-Oberteil (3) unabhängig von dem Hauben-Oberteil (4) derart in axialer Richtung P1 verfahrbar ist, dass die Vulkanisierform unter Vakuumbedingungen im Innenraum der Haube (12) vollständig schließbar ist.

2. Heizpresse (1) nach Anspruch 1, **dadurch gekennzeichnet, dass** ein hydraulischer, pneumatischer oder elektrischer Aktuator (24) angeordnet ist, durch den das Hauben-Oberteil (4) unabhängig von dem Heizpressen-Oberteil (3) in axialer Richtung (P1) verfahrbar ist.

3. Heizpresse (1) nach Anspruch 1 oder 2, **dadurch gekennzeichnet, dass** an dem Heizpressen-Unterteil (6) ein Hauben-Unterteil in Form eines Kreisringes angeordnet ist, wobei der Kreisring des Hauben-Oberteiles (3) und der Kreisring des Hauben-Unterteiles den gleichen Innendurchmesser und den gleichen Außendurchmesser aufweisen und miteinander fluchtend in der Heizpresse (1) angeordnet sind.

4. Heizpresse (1) nach einem oder mehreren der vorangehenden Ansprüche, **dadurch gekennzeichnet, dass** die Dichtungen Ringdichtungen (5, 9) mit runden, eckigen und/oder flachen Querschnitten sind.

5. Heizpresse (1) nach Anspruch 4, **dadurch gekennzeichnet, dass** die Ringdichtung (5, 9) in einer kreisringförmigen Nut angeordnet ist, wobei der Durchmesser der Ringdichtung (5, 9) geringfügig größer als die Tiefe der Nut ist.

6. Heizpresse (1) nach Anspruch 4 oder 5, **dadurch gekennzeichnet, dass** die Ringdichtung (5, 9) aus Vollmaterial besteht.

7. Heizpresse (1) nach Anspruch 4 oder 5, **dadurch gekennzeichnet, dass** die Ringdichtung (5, 9) ein in ihrem Durchmesser veränderbarer Schlauch ist.

8. Heizpresse (1) nach einem oder mehreren der Ansprüche 4 bis 7, **dadurch gekennzeichnet, dass** die Ringdichtung (5, 9) eine differentiell gepumpte Doppelringdichtung ist.

9. Heizpresse (1) nach einem oder mehreren der vorangehenden Ansprüche, **dadurch gekennzeichnet, dass** der Vakuumtank (11) ein Volumen aufweist, welche etwa 5 bis 10 mal größer als das Volumen der geschlossenen Haube(n) (4) ist.

10. Verfahren zur Vulkanisation eines Fahrzeugluftreifens unter Vakuum in einer Heizpresse (1) nach einem oder mehreren der Ansprüche 1 bis 9, **dadurch gekennzeichnet, dass** man folgende Schritte nacheinander ausführt:
a) Beladen der geöffneten Heizpresse (1) durch Einlegen des zu vulkanisierenden Rohreifens in den Container (2)
b) Verfahren des Hauben-Oberteils (4) um einen ersten Hub (Hi) in axialer Richtung (P1) in Richtung Heizpressen-Unterteil (6), bis ein geschlossener Haubeninnenraum (12) aus Hauben-Oberteil (4), Heizpressen-Oberteil (3) und Heizpressen-Unterteil (6) erhalten ist, während die Vulkanisierform noch geöffnet ist
c) nur im Fall, dass die Ringdichtung (5, 9) ein in ihrem Durchmesser veränderbarer Schlauch ist: Aufpumpen der kreisringförmigen Schlauchdichtung, um den Haubeninnenraum (12) vakuumdicht abzudichten
d) Öffnen der Verbindung zwischen Vakuumtank (11) und Haubeninnenraum (12) zur Erzeugung eines Teil-Vakuums in dem vakuumdicht geschlossenen Haubeninnenraum (12) durch Druckausgleich zwischen Vakuumtank (11) und Haubeninnenraum (12)
e) bei Erhalt des Teil-Vakuums im Haubeninnenraum (12): Schließen der Verbindung zwischen Vakuumtank (11) und Haubeninnenraum (12), Öffnen der Verbindung zwischen Haubeninnenraum (12) und Pumpe (10) und Abpumpen der restlich verbliebenden Luft aus dem Haubeninnenraum (12) zur Erzeugung des Vakuums
f) Verfahren des Heizpressen-Oberteiles (3) um einen zweiten Hub (H₂), bei dem man den Container (2) derart verfährt, so dass die Vulkanisierform vollständig geschlossen wird und anschließendes Schließen der Verbindung zwischen dem Haubeninnenraum (12) und der Pumpe (10)
g) Vulkanisation des Rohreifen und Öffnen der Verbindung zwischen Pumpe (10) und Vakuumtank (11) und Erzeugung eines Vakuums im Vakuumtank (11), wobei die Verbindung der Pumpe (10) zu dem Haubeninnenraum (12) und die Verbindung des Vakuumtanks (11) zum Haubeninnenraum (12) jeweils geschlossen sind
h) Öffnen der Heizpresse (1) durch Verfahren des Hauben-Oberteils (4) und des Heizpressen-Oberteils (3) und Entladen des fertig vulkanisierten Reifens und zur Vulkanisierung jedes weiteren Reifens Wiederholung der Schritte a) - h).

11. Verfahren zur Vulkanisation eines Fahrzeugluftreifens nach Anspruch 10, **dadurch gekennzeichnet, dass** man zur Erleichterung von Schritt h) vorher ein weiteres in der Haube (4) angeordnetes Ventil zum Brechen des Vakuums öffnet und anschließend wieder schließt.

## Claims

1. Heating press (1) for vulcanizing a vehicle tyre under a vacuum,
- comprising a heating press upper part (3) and a heating press lower part (6), wherein a container (2) having the mould parts (14, 16, 17, 18, 21) of a vulcanizing mould and a cylindrical hood upper part (4) enclosing said container are arranged on the heating press upper part (3), and wherein the heating press upper part (3) and the heating press lower part (6) are connected to the container (2) in such a way that, when the heating press upper part (3) is being lowered through a stroke that takes place in the axial direction (P1), the mould parts (14, 16, 17, 18, 21) of the vulcanizing mould can be closed in the radial direction (P2),
- wherein the hood upper part (4) and the heating press upper part (3) can be moved independently of one another and relative to one another in the axial direction (P1),
- wherein the cylindrical hood upper part (4) has a length (23) which is sufficient to form a closed hood interior space (12) with the heating press lower part (6) and heating press upper part (4) when the heating press upper part (3) is open,
- wherein at least one respective vacuum-tight seal (5) is arranged on those surfaces at which the hood upper part (4) directly adjoins the heating press upper part (3) and - when the hood interior space (12) is closed - the heating press lower part (6), in order to make the closed hood interior space (12) sealable in a vacuum-tight manner, wherein the seals (5) are preferably arranged on the heating press upper part and on the heating press lower part,
- wherein, in the course of a first stroke (H₁), the hood upper part (4) can be moved independently of the heating press upper part (3) in the axial direction P1 in such a way that said hood upper part forms a vacuum-tight hood interior space (12) with the heating press lower part (6), although the vulcanizing mold remains open in an air-permeable manner,
- wherein a pump (10) and a vacuum tank (11), by means of which a vacuum can be generated in the interior space of the hood (12) after the first stroke (H₁), are provided, wherein the vacuum tank (11) and the pump (10) are connected to the interior space (12) of the hood (4), and wherein the vacuum tank (11) and the pump (10) are connected to one another, and
- wherein, in the course of a second stroke (H₂), the heating press upper part (3) can be moved independently of the hood upper part (4) in the axial direction P1 in such a way that the vulcanizing mould can be completely closed under vacuum conditions in the interior space of the hood (12).

2. Heating press (1) according to Claim 1, **characterized in that** a hydraulic, pneumatic or electric actuator (24), which can move the hood upper part (4) independently of the heating press upper part (3) in the axial direction (P1), is provided.

3. Heating press (1) according to Claim 1 or 2, **characterized in that** a hood lower part in the form of a circular ring is arranged on the heating press lower part (6), wherein the circular ring of the hood upper part (3) and the circular ring of the hood lower part have the same inside diameter and the same outside diameter and are arranged in line with one another in the heating press (1).

4. Heating press (1) according to one or more of the preceding claims, **characterized in that** the seals are ring seals (5, 9) with circular, polygonal and/or flat cross sections.

5. Heating press (1) according to Claim 4, **characterized in that** the ring seal (5, 9) is arranged in a circular-ring-shaped groove, wherein the diameter of the ring seal (5, 9) is slightly greater than the depth of the groove.

6. Heating press (1) according to Claim 4 or 5, **characterized in that** the ring seal (5, 9) consists of solid material.

7. Heating press (1) according to Claim 4 or 5, **characterized in that** the ring seal (5, 9) is a hose of variable diameter.

8. Heating press (1) according to one or more of Claims 4 to 7, **characterized in that** the ring seal (5, 9) is a differentially inflated double ring seal.

9. Heating press (1) according to one or more of the preceding claims, **characterized in that** the vacuum tank (11) has a volume that is approximately 5 to 10 times greater than the volume of the closed hood(s) (4).

10. Method for vulcanizing a pneumatic vehicle tyre under a vacuum in a heating press (1) according to one or more of Claims 1 to 9, **characterized in that** the following steps are performed in succession:
a) loading the opened heating press (1) by placing the green tyre for vulcanization into the container (2),
b) moving the hood upper part (4) through a first stroke (H₁) in the axial direction (P1) towards the heating press lower part (6), until a closed hood interior space (12) composed of hood upper part (4), heating press upper part (3) and heating press lower part (6) is obtained, while the vulcanizing mould remains open,
c) only if the ring seal (5, 9) is a hose of variable diameter: inflating the circular-ring-shaped hose seal in order to seal off the hood interior space (12) in a vacuum-tight manner,
d) opening the connection between the vacuum tank (11) and the hood interior space (12) in order to generate a partial vacuum, by way of pressure equalization between the vacuum tank (11) and the hood interior space (12), in the hood interior space (12) that has been closed in a vacuum-tight manner,
e) when the partial vacuum is obtained in the hood interior space (12): closing the connection between the vacuum tank (11) and the hood interior space (12), opening the connection between the hood interior space (12) and the pump (10), and pumping the remaining air out of the hood interior space (12) in order to generate the vacuum,
f) moving the heating press upper part (3) through a second stroke (H₂), in the course of which the container (2) is moved in such a way that the vulcanizing mould is completely closed, and subsequently closing the connection between the hood interior space (12) and the pump (10),
g) vulcanizing the green tyre and opening the connection between the pump (10) and the vacuum tank (11) and generating a vacuum in the vacuum tank (11), wherein the connection of the pump (10) to the hood interior space (12) and the connection of the vacuum tank (11) to the hood interior space (12) are each closed,
h) opening the heating press (1) by moving the hood upper part (4) and the heating press upper part (3) and removing the fully vulcanized tyre and repeating the steps a) - h) in order to vulcanize each further tyre.

11. Method for vulcanizing a pneumatic vehicle tyre according to Claim 10, **characterized in that**, to facilitate step h), this is preceded by a further valve arranged in the hood (4) being opened in order to deplete the vacuum and subsequently being closed again.

## Revendications

1. Presse chauffante (1) pour la vulcanisation sous vide d'un pneu de véhicule
- avec une partie supérieure de presse chauffante (3) et une partie inférieure de presse chauffante (6), un contenant (2) présentant les parties de moule (14, 16, 17, 18, 21) d'un moule de vulcanisation et une partie supérieure de capot cylindrique (4) entourant celui-ci étant agencés sur la partie supérieure de presse chauffante (3), et la partie supérieure de presse chauffante (3) et la partie inférieure de presse chauffante (6) étant en liaison avec le contenant (2) de telle sorte que, lors de la descente de la partie supérieure de presse chauffante (3), les parties de moule (14, 16, 17, 18, 21) du moule de vulcanisation peuvent être fermées dans la direction radiale (P2) par l'intermédiaire d'une course s'effectuant dans la direction axiale (P1),
- la partie supérieure de capot (4) et la partie supérieure de presse chauffante (3) étant déplaçables dans la direction axiale (P1) indépendamment l'une de l'autre et l'une par rapport à l'autre,
- la partie supérieure de capot cylindrique (4) présentant une longueur (23) qui est suffisante pour réaliser un espace intérieur de capot fermé (12) avec la partie inférieure de presse chauffante (6) et la partie supérieure de presse chauffante (4) lorsque la partie supérieure de presse chauffante (3) est ouverte,
- au moins un joint (5) étanche au vide étant agencé sur chacune des surfaces sur lesquelles la partie supérieure de capot (4) est directement adjacente à la partie supérieure de presse chauffante (3) et - lorsque l'espace intérieur de capot (12) est fermé - à la partie inférieure de presse chauffante (6), afin de pouvoir rendre étanche au vide l'espace intérieur de capot (12) fermé, les joints (5) étant de préférence agencés sur la partie supérieure de presse chauffante et sur la partie inférieure de presse chauffante,
- lors d'une première course (H₁), la partie supérieure de capot (4) pouvant être déplacée dans la direction axiale P1 indépendamment de la partie supérieure de presse chauffante (3), de telle sorte que celle-ci réalise avec la partie inférieure de presse chauffante (6) un espace intérieur de capot (12) étanche au vide, tandis que le moule de vulcanisation est cependant encore ouvert de manière à laisser passer l'air,
- une pompe (10) et un réservoir à vide (11) étant agencés, au moyen desquels un vide peut être généré dans l'espace intérieur du capot (12) après la première course (H₁), le réservoir à vide (11) et la pompe (10) étant en liaison avec l'espace intérieur (12) du capot (4), et le réservoir à vide (11) et la pompe (10) étant en liaison l'un avec l'autre et
- lors d'une deuxième course (H₂), la partie supérieure de presse chauffante (3) pouvant être déplacée dans la direction axiale P1 indépendamment de la partie supérieure de capot (4), de telle sorte que le moule de vulcanisation peut être complètement fermé dans des conditions de vide à l'intérieur du capot (12).

2. Presse chauffante (1) selon la revendication 1, **caractérisée en ce qu'**un actionneur hydraulique, pneumatique ou électrique (24) est agencé, grâce auquel la partie supérieure de capot (4) peut être déplacée dans la direction axiale (P1) indépendamment de la partie supérieure de presse chauffante (3).

3. Presse chauffante (1) selon la revendication 1 ou 2, **caractérisée en ce qu'**une partie inférieure de capot sous la forme d'un anneau circulaire est agencée sur la partie inférieure de presse chauffante (6), l'anneau circulaire de la partie supérieure de capot (3) et l'anneau circulaire de la partie inférieure de capot présentant le même diamètre intérieur et le même diamètre extérieur et étant agencés en alignement l'un avec l'autre dans la presse chauffante (1).

4. Presse chauffante (1) selon une ou plusieurs des revendications précédentes, **caractérisée en ce que** les joints sont des joints annulaires (5, 9) de sections transversales rondes, angulaires et/ou plates.

5. Presse chauffante (1) selon la revendication 4, **caractérisée en ce que** le joint annulaire (5, 9) est agencé dans une rainure en forme d'anneau circulaire, le diamètre du joint annulaire (5, 9) étant légèrement supérieur à la profondeur de la rainure.

6. Presse chauffante (1) selon la revendication 4 ou 5, **caractérisée en ce que** le joint annulaire (5, 9) est constitué de matériau plein.

7. Presse chauffante (1) selon la revendication 4 ou 5, **caractérisée en ce que** le joint annulaire (5, 9) est un tuyau dont le diamètre peut être modifié.

8. Presse chauffante (1) selon une ou plusieurs des revendications 4 à 7, **caractérisée en ce que** le joint annulaire (5, 9) est un joint annulaire double à pompage différentiel.

9. Presse chauffante (1) selon une ou plusieurs des revendications précédentes, **caractérisée en ce que** le réservoir à vide (11) présente un volume qui est environ 5 à 10 fois plus grand que le volume du ou des capots fermés (4).

10. Procédé de vulcanisation sous vide d'un pneumatique de véhicule dans une presse chauffante (1) selon une ou plusieurs des revendications 1 à 9, **caractérisé en ce que** les étapes suivantes sont réalisées successivement :
a) le chargement de la presse chauffante ouverte (1) en plaçant le pneu cru à vulcaniser dans le contenant (2),
b) le déplacement de la partie supérieure de capot (4) d'une première course (H₁) dans la direction axiale (P1) en direction de la partie inférieure de presse chauffante (6), jusqu'à obtenir un espace intérieur de capot fermé (12) à partir de la partie supérieure de capot (4), de la partie supérieure de presse chauffante (3) et de la partie inférieure de presse chauffante (6), tandis que le moule de vulcanisation est encore ouvert,
c) uniquement dans le cas où le joint annulaire (5, 9) est un tuyau dont le diamètre peut être modifié : le gonflage du joint en tuyau en forme d'anneau circulaire pour rendre l'espace intérieur de capot (12) étanche au vide.
d) l'ouverture de la liaison entre le réservoir à vide (11) et l'espace intérieur de capot (12) pour générer un vide partiel dans l'espace intérieur de capot (12) fermé de manière étanche au vide, en équilibrant la pression entre le réservoir à vide (11) et l'espace intérieur de capot (12),
e) lors de l'obtention du vide partiel dans l'espace intérieur de capot (12) : la fermeture de la liaison entre le réservoir à vide (11) et l'espace intérieur de capot (12), l'ouverture de la liaison entre l'espace intérieur de capot (12) et la pompe (10) et le pompage de l'air résiduel restant dans l'espace intérieur de capot (12) pour générer le vide,
f) le déplacement de la partie supérieure de presse chauffante (3) d'une deuxième course (H₂), lors de laquelle le contenant (2) est déplacé de telle sorte que le moule de vulcanisation est complètement fermé, puis la fermeture de la liaison entre l'espace intérieur de capot (12) et la pompe (10),
g) la vulcanisation du pneu cru et l'ouverture de la liaison entre la pompe (10) et le réservoir à vide (11) et la génération d'un vide dans le réservoir à vide (11), la liaison de la pompe (10) à l'espace intérieur de capot (12) et la liaison du réservoir à vide (11) à l'espace intérieur de capot (12) étant respectivement fermées,
h) l'ouverture de la presse chauffante (1) en déplaçant la partie supérieure de capot (4) et la partie supérieure de presse chauffante (3) et le déchargement du pneu vulcanisé fini et, pour vulcaniser chaque autre pneu, la répétition des étapes a) - h).

11. Procédé de vulcanisation d'un pneumatique de véhicule selon la revendication 10, **caractérisé en ce que**, pour faciliter l'étape h), une autre valve agencée dans le capot (4) est ouverte au préalable pour casser le vide, puis refermée.
